## Europäisches Patentamt
## European Patent Office
## Office européen des brevets

(19)

(11) Numéro de publication: **0 165 224**
**B1**

(12) # FASCICULE DE BREVET EUROPÉEN

(45) Date de publication du fascicule du brevet:
**23.08.89**

(21) Numéro de dépôt: **85870059.4**

(22) Date de dépôt: **29.04.85**

(51) Int. Cl.⁴: **F 23 K 1/00,** F 23 J 15/00,
B 02 C 19/00, B 02 C 13/22,
B 02 C 17/04, B 02 C 17/18 //
F16C13/04

(54) **Equipement de chauffe directe.**

(30) Priorité: **03.05.84 BE 212862**

(43) Date de publication de la demande:
**18.12.85 Bulletin 85/51**

(45) Mention de la délivrance du brevet:
**23.08.89 Bulletin 89/34**

(84) Etats contractants désignés:
**AT CH DE FR GB IT LI LU NL SE**

(56) Documents cité:
**EP-A-0 019 408**
**WO-A-83/04085**
**BE-A-379 682**
**DE-A-3 134 297**
**DE-C-841 381**
**FR-A-554 914**
**FR-A-573 994**
**FR-A-1 048 568**
**FR-A-1 096 107**
**FR-A-1 120 290**
**FR-A-1 594 660**
**FR-E-52 754**
**GB-A-441 215**
**GB-A-812 292**
**GB-A-1 002 877**
**GB-A-2 029 265**
**US-A-1 808 509**
**US-A-2 399 051**

(73) Titulaire: **Bougard, Jacques Léopold, le Beaulieu
44, B-6140 Fontaine- l'Evêque (BE)**

(72) Inventeur: **Bougard, Jacques Léopold, le Beaulieu
44, B-6140 Fontaine- l'Evêque (BE)**

(74) Mandataire: **Schmitz, Yvon, Bureau Gevers S.A.
rue de Livourne 7 bte 1, B-1050 Bruxelles (BE)**

(56) Documents cité: (suite)
**US-A-3 049 857**
**US-A-3 887 249**
**US-A-4 284 609**
**US-A-4 426 042**

**"SCIENCE ET TECHNIQUE"** vol.nos 7,8,9,10/1944 et
1,3,4,11,12/1945

## Description

La présente invention est relative à un équipement de chauffe directe par combustible, en particulier pour des installations, telles que générateurs d'eau chaude, de vapeur et de gaz chauds, fours de cuisson, sécheurs, comprenant notamment un brûleur, une chambre de combustion, un échangeur à haute température, une source de combustible solide humide, un broyeur pour broyer le combustible en amont de la chambre de combustion et des moyens pour introduire directement dans cette dernière, sans réduire sa teneur en eau, le combustible broyé en présence d'un fluide comburant primaire.

L'inconvénient principal des équipements classiques de chauffe au charbon pulvérisé du type direct ou indirect, consiste en ce qu'il est nécessaire de sécher le combustible pour ramener l'humidité de celui-ci aux environs de 1 % et assurer ainsi la fluidité du produit. De plus, il s'avère également nécessaire dans ces équipements conus de réaliser les opérations de transport et de stockage intermédiaires du pulvérisé séché sous atmosphère d'azote pour limiter les risques d'explosion. Enfin, les produits de combustion ou buées, dans les équipements classiques, sont rejetés à l'atmosphère sans aucune épuration, ce qui s'avère extrêmement préjudiciable pour l'environnement.

A cet égard, la demande de brevet WO n° 83/04085 de Sayler et White concerne un broyeur ventilé à percussion permettant de réaliser en un seul passage avec recyclages internes, des opérations de broyage ultrafin sur des particules de charbons ou autres combustibles solides en suspension dans un courant d'air à température ambiante, dont le débit en poids représente 10 à 30 % de l'air comburant total nécessaire. Cette demande de brevet revendique notamment la possibilité de traiter tous les combustibles solides humides, mais ne précise pas le point essentiel qui est la teneur maximale admissible en eau. En réalité, tous les broyeurs connus, du type ventilé à percussion, permettent le broyage de combustibles solides humides en suspension dans l'air à température ambiante, pour autant que la teneur en eau ne dépasse pas 1 à 4 % suivant les types. Au delà de cette limite, de graves inconvénients de collages, dépôts, bouchages, obstructions, puissances absorbées irrégulières et usures excessives rendent l'exploitation impossible. De plus, tous ces broyeurs du type ventilé à percussion, et notamment le broyeur de Sayler et White, comportent des moteurs extérieurs avec transmissions et présentent en général de grandes surfaces de déperdition.

D'autre part, le brevet US-A-2 399 051 de Maxon et coll. concerne un broyeur à boulets en vitesses subcritiques de conception classique, mais équipé d'un dispositif spécial de classement granulométrique interne avec recyclage, évitant la sortie de particules trop grosses.

L'invention a pour but de prévoir un équipement de chauffe directe par combustible, en particulier pour les installations, tel les que générateurs d'eau chaude, de vapeur et de gaz chauds, fours de cuisson, sécheurs, comprenant un brûleur, une chambre de combustion, un échangeur haute température, ainsi qu'un broyeur pour broyer ce combustible en amont de la chambre de combustion et des moyens pour introduire directement dans cette dernière, sans réduire sa teneur en eau, le combustible broyé en présence d'un fluide comburant primaire, ce broyeur étant à percussion et comprenant, alignées suivant un axe vertical, une enceinte supérieure munie d'un conduit d'alimentation en combustible auquel est associé un doseur, et d'un conduit d'amenée du comburant gazeux primaire, au moins une enceinte de broyage pourvue d'une enveloppe, et une enceinte inférieure pourvue d'un conduit d'évacuation du combustible broyé et du comburant primaire vers la chambre de combustion, remédiant aux inconvénients des installations classiques, tout en permettant également d'épurer les produits de combustion ou buées rejetés à l'atmosphère. L'équipement de l'invention se révèle de plus extrêmement fiable, très sûr, fort simple et peu coûteux à la construction, en fonctionement et à l'entretien.

A cet effet, selon l'invention, le conduit d'amenée du comburant gazeux primaire comprend un régulateur de débit agencé pour que ce débit soit suffisant au maintien en suspension turbulente du combustible pulvérisé et insuffisant pour provoquer l'inflammation de ce dernier et l'enceinte de broyage comprend une trémie en forme de tronc de cône dont l'axe est situé sur l'axe vertical susdit et dont la grande base est raccordée à l'enceinte supérieure précitée tandis que sa petite base est située en regard d'un disque de broyage calé sur l'arbre d'un moteur supporté dans l'enceinte de broyage, de manière a ce que lesdits moteur et disque soient coaxiaux à la trémie et que le combustible broyé par le disque soit projeté sur les parois internes de l'enveloppe présentée par l'enceinte de broyage et entourant la trémie, l'enceinte inférieure étant raccordée sur l'enveloppe de l'enceinte de broyage.

Suivant un mode de réalisation avantageux de l'invention, le moteur d'entraînement du disque de broyage est fixé dans un caisson étanche, coaxial à la trémie, supporté à l'intérieur de l'enveloppe de broyage par des bras dont au moins un est creux pour permettre l'alimentation du moteur, une garniture d'étanchéité étant prévue sur ce caisson à l'endroit de passage de l'arbre sur lequel est calé le disque de broyage, ce disque de broyage comprenant sur sa face tournée vers la petite base de la trémie, des broches dont les axes sont parallèles à celui du disque.

Suivant un mode de réalisation particulièrement avantageux de l'invention, le disque de broyage susdit coopère avec un anneau fixé à la périphérie de la petite base de la trémie coaxialement au disque de broyage, la face de cet anneau fixe tournée vers le disque de broyage étant garnie de broches dont les axes sont parallèles aux broches du disque de broyage, la distance séparant les faces tournées l'une vers l'autre du disque et de l'anneau étant supérieure à la longueur des broches les plus longues et inférieure à la somme de la longueur des broches du disque et de la longueur des broches de l'anneau, les broches du disque et de l'anneau étant régulièrement réparties suivant des cercles, dont les centres sont situés sur l'axe commun au disque et à l'anneau, de manière à ce que les broches fixes de l'anneau réparties sur un cercle soient toujours situées entre les broches mobiles du disque de broyage réparties sur deux cercles.

Suivant une autre forme de réalisation de l'invention, le broyeur précité est constitué par un broyeur à boulets comprenant un tambour cylindrique dont la longueur est supérieure au diamètre, un caisson formant un berceau cylindrique qui entoure la face latérale du tambour sur une partie de son pourtour, des flasques circulaires étant prévus sur chaque base du tambour et leur rayon étant supérieur au rayon du berceau, les faces du caisson en regard de la face latérale du tambour et en regard des flasques étant perforées pour livrer passage à de l'air sous pression formant un coussin pour, d'une part, supporter le tambour et, d'autre part, maintenir ce dernier, grâce au coussin d'air entre le caisson et les flasques, immobile suivant une direction parallèle à son axe, des moyens étant prévus pour mettre et maintenir ledit caisson sous pression, des moyens d'entraînement agencés pour entraîner le tambour en rotation autour de son axe, un conduit d'amenée du combustible, fixe par rapport au tambour et coaxial à ce dernier, débouchant à l'intérieur du tambour par une ouverture réalisée dans une des bases de ce dernier, un doseur agencé dans ledit conduit d'amenée, un conduit d'évacuation du combustible pulvérisé, fixe par rapport au tambour et coaxial à ce dernier, débouchant à l'intérieur dudit tambour à travers une ouverture réalisée dans l'autre base de celui-ci et des moyens pour faire circuler le combustible pulvérisé et le comburant primaire du tambour vers la chambre de combustion.

Suivant une forme de réalisation particulièrement avantageuse de l'invention, au moins l'ouverture susdite à travers laquelle le conduit d'amenée du combustible débouche dans le tambour est telle qu'il subsiste, entre les bords de l'ouverture et la face externe du conduit, un espace suffisant pour le passage d'un comburant primaire gazeux, les moyens précités pour faire circuler le combustible pulvérisé et le comburant primaire du tambour vers la chambre de combustion étant constitués par un ventilateur associé au conduit d'évacuation susdit, ce ventilateur étant tel qu'il puisse aspirer le comburant primaire gazeux à travers l'espace précité subsistant autour du conduit d'amenée du combustible.

Outre les avantages précités, comme on l'a déjà mentionné, l'équipement de l'invention permet également d'épurer les produits de combustion ou buées rejetés à l'atmosphère, par l'introduction soit à l'endroit de broyage du combustible, soit à l'endroit de récupération de la chaleur des gaz de combustion, de substances capables de fixer les matières nocives, telles que le soufre et les cendres volantes, comme, par exemple, des produits neutralisants, tels que le carbonate de calcium, le carbonate de potassium, le carbonate de sodium ou la chaux vive.

D'autres détails et particularités de l'invention ressortiront de la description des dessins annexés au présent mémoire, qui représentent, à titre d'exemples non limitatifs, diverses formes particulières de l'objet de l'invention.

La figure 1 est une figure schématique, en élévation et en coupe, montrant une forme de réalisation de broyeur à percussion de l'équipement de chauffe directe de l'invention.

La figure 2 est une figure schématique, en élévation et en coupe, montrant une forme de réalisation de broyeur à boulets de l'équipement de chauffe directe de l'invention.

La figure 3 est une vue en coupe suivant la ligne III - III de la figure 2.

Dans les différentes figures, les mêmes notations de référence désignent des éléments identiques ou analogues.

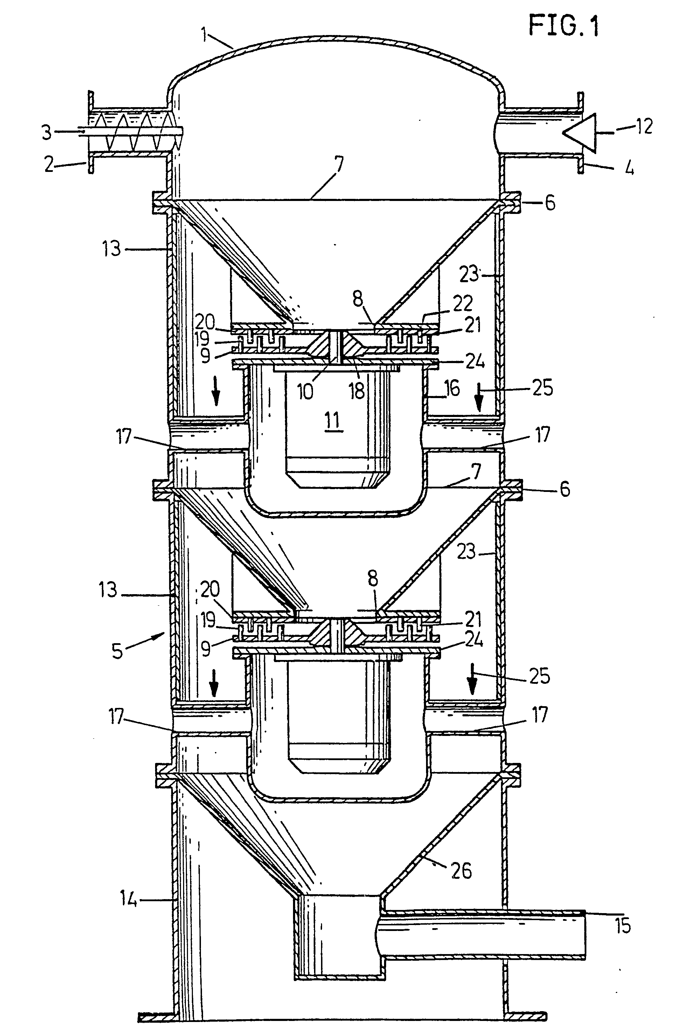

La figure 1, comme on vient de le préciser, montre une forme de réalisation d'une partie de l'équipement de chauffe directe de l'invention, c'est-à-dire d'un broyeur à percussion utilisé pour des combustibles en particulier des fines 0 - 6 mm de charbons cokéfiants, gras ou flambants, dont les teneurs en cendres et en eau sont de préférence limitées à 10 %. Ce broyeur à percussion comprend, alignées suivant un axe vertical, une enceinte supérieure (1) munie d'un conduit d'alimentation (2) en combustible solide humide, auquel est associé un doseur (3) à vis sans fin, et d'un conduit d'amenée (4) du comburant gazeux primaire, auquel est associé un régulateur de débit (12) agencé pour que ce débit soit suffisant pour maintenir en suspension turbulente le combustible pulvérisé et insuffisant pour provoquer l'inflammation de ce dernier, deux enceintes de broyage intermédiaires (5) comprenant chacune une trémie (6) en forme de tronc de cône dont l'axe est situé sur l'axe vertical précité et dont la grande base (7) est raccordée à l'enceinte supérieure (1), la petite base (8) étant située en regard d'un disque de broyage mobile (9) calé d'un moteur (11) supporté dans l'enceinte de broyage (5), le moteur (11) et le disque (9) de chaque enceinte de broyage étant coaxiaux à la trémie correspondante (6), le combustible broyé par chaque disque de broyage (9) étant projeté sur les parois internes d'une enveloppe (13) représentée par chaque enceinte de broyage (5), entourant la trémie, les parois internes étant chacune garnie d'un blindage (23) réalisé en un matériau présentant une haute résistance à l'usure. Le broyeur à percussion selon l'invention comprend également une enceinte inférieure (14), raccordée sur l'enveloppe (13) de l'enceinte de broyage inférieure (5), pourvue d'un conduit (15) d'évacuation du combustible broyé et du comburant primaire vers la chambre de combustion. Le moteur d'entraînement (11) de chaque disque de broyage (9) est fixé par l'intermédiaire d'un plateau (24) dans un caisson (16) étanche, coaxial à la trémie (6), supporté à l'intérieur de l'enveloppe de broyage (13) par des bras tubulaires (17) dont au moins un est creux pour permettre l'alimentation du moteur, une garniture d'étanchéité (18) étant prévue sur le caisson (16) à l'endroit de passage de l'arbre (10) sur lequel est calé le disque de broyage (9).

Les disques de broyage (9) comprennent, suivant l'invention, sur leur face tournée vers la petite base (8) de la trémie (6), des broches (19) dont les axes sont parallèles à celui du disque.

Chaque disque de broyage (9) coopère avec un anneau (20) correspondant fixé à la périphérie de la petite base (8) de la trémie (6) coaxialement au disque de broyage, la face de chaque anneau fixe (20) tournée vers le disque de broyage correspondant (19) étant garnie de broches (21) dont les axes sont parallèles aux broches (19) du disque de broyage (9). Les longueurs des broches (19) sont égales, de même que les longueurs des broches (21), la distance séparant les faces tournées l'une vers l'autre du disque (9) et de l'anneau (20) correspondant étant supérieure à la longueur des broches les plus longues, ces dernières pouvant être constituées soit par les broches (19) soit par les broches (21), et inférieure à la somme de la longueur des broches (19) et de la longueur des broches (21), les broches (19) et (21) étant régulièrement réparties suivant des cercles, dont les centres sont situés sur l'axe commun au disque (9) et à l'anneau correspondant (20), de manière à ce que les broches (21) de chaque anneau (20) répartie sur un cercle soient toujours situées entre les broches mobiles (19) de chaque disque de broyage (9) correspondant, réparties sur deux cercles. Ces broches (19) et (21) peuvent être constituées de broches élastiques renforcées en acier, à ressort, de très grande dureté, qui sont immobilisées dans des trous (22) alésés ou simplement percés ou forés dans le disque ou l'anneau, sans réalésage ni autre travail de retouche. Lors de leur mise en place, les broches élastiques sont comprimées et serrent fortement, par leur force élastique, contre la paroi des trous (22) Il en résulte une haute résistance permanente de l'assemblage, même lors de charges percutantes et variables. De plus, ces broches élastiques sont très économiques et facilement interchangeables. Les broches de broyage (19) et (21) peuvent également être percées de trous de même diamètre que les trous (22), les broches étant dans ce cas fixées sur le disque ou l'anneau par des goupilles élastiques. Les broches (19) et (21) peuvent également être fixées dans les trous alésés (22) par expansion mécanique ou hydraulique, ou sous l'effet de l'explosion d'une faible charge intérieure ou encore par brasage ou soudure. On notera également que les disques de broyage à broches et les anneaux à broches peuvent être réalisés chacun en une seule pièce, par exemple par coulée, forgeage, frittage, usinage ou tout autre procédé approprié. On pourra également suivant l'invention, supprimer les broches fixes (21) sur les anneaux (20), les broches mobiles (19) étant alors régulièrement réparties sur le disque suivant des rayons de ce dernier et à faibles distances les unes des autres, de façon à former des surfaces d'imact rapprochées.

Dans chacune des enceintes de broyage (5), le combustible solide humide en suspension turbulente dans le comburant primaire gazeux pénètre par la trémie (6) en forme de tronc de cône et passe par l'ouverture constituée par sa petite base (8) dans l'espace compris entre l'anneau fixe (20) et le disque mobile (9), où il est projeté par la force centrifuge. La pulvérisation des grains de combustible est assurée par percussion et tourbillonnement entre, d'une part, les broches tournantes (19) et fixes (21) et, d'autre part, entre la rangée extérieure de broches tournantes (19) et le blindage intérieur (23) de l'enveloppe (13). L'entraînement par le comburant, l'absence de sélecteurs fixes, tels que grilles ou ventelles l'absence de sélecteurs mobiles, tels que bras tournants ou roues à aubes, éliminent toute augmentation de la concentration locale en solides et, par conséquent, évitent le colmatage par agglomération ou collage des particules humides. D'autre part, toutes autres conditions restant égales, la réduction du diamètre moyen des grains de combustible augmente avec le nombre d'enceintes de broyage (5) successives et avec la vitesse de rotation des disques de broyage (9). Le mélange de combustible humide finement pulvérisé et de comburant primaire, après être passé de la première enceinte de broyage vers la seconde enceinte de broyage suivant les flèches (25), est entraîné dans la trémie (26) en forme de tronc de cône de l'enceinte inférieure (14), et est évacué par le conduit (15), fixé à cette dernière, vers le brûleur.

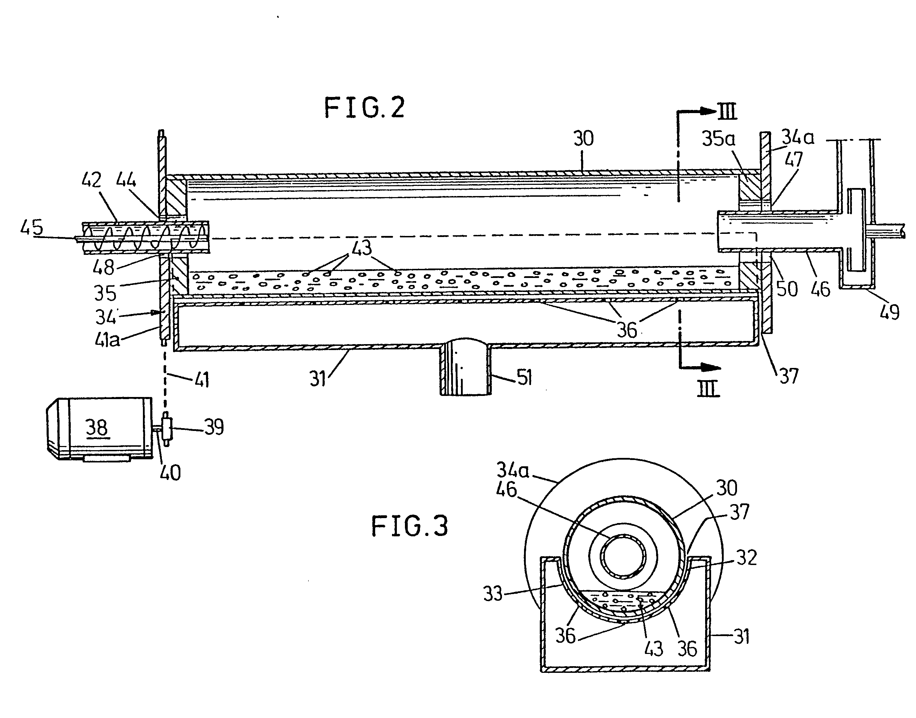

Les figures 2 et 3 représentent une autre forme de réalisation d'appareil de broyage de l'invention, que l'on peut utiliser à la place du broyeur à percussion dans l'équipement de chauffe directe de l'invention, à savoir un brûleur à boulets pour combustibles solides dont la teneur en eau est de l'ordre de 4 à 50 % du mélange. Le broyeur à boulets comprend un tambour cylindrique (30) dont la longueur est sensiblement supérieure au diamètre, ainsi qu'un caisson de support (31) du tambour agencé pour que l'axe du tambour soit disposé horizontalement, ce caisson (31) formant un berceau cylindrique (32) qui entoure la face latérale (33) du tambour sur sensiblement la moitié de son pourtour, des flasques circulaires (34, 34a) étant prévus sur les bases (35, 35a) du tambour et leur rayon étant supérieur au rayon du berceau (32), les faces du caisson (31) en regard de la face latérale (33) du tambour (30) et en regard des flasques circulaires (34, 34a) étant pourvues de perforations (36) constituant des tuyères, pour livrer passage à de l'air sous pression formant un coussin (37), ce coussin d'air (37) servant, d'une part, à supporter le tambour (30) et, d'autre part, à maintenir ce dernier, entre le caisson (31) et les flasques circulaires (34, 34a) suivant une direction parallèle à son axe, des moyens (non représentés) étant prévus pour mettre et maintenir le caisson (31) sous pression. L'air, par exemple de l'air propre sous une pression de l'ordre de 1000 mm d'eau, est introduit dans le caisson (31) par la tubulure (51) et s'échappe par les multiples perforations (36) à fortes pertes de charge, de manière à supporter et à guider le tambour cylindrique (30) et les flasques circulaires (34, 34a), avec la même pression en tous points. Cette particularité de l'invention permet de réaliser les parois du tambour cylindrique (30), et éventuellement chacune de ses bases (35, 35a), en un matériau présentant un faible coefficient de friction à l'état sec et à l'état humide, ainsi qu'une grande résistance à l'usure par abrasion et frottement, matériau qui peut être constitué, par exemple, d'une polyoléfine de haut poids moléculaire, de préférence en polyéthylène ou polybutylène, de polyuréthanne, d'acier ou de fonte coulés par centrifugation et trempés, de porcelaine, de silice fondue, de verre ou de toute autre matière répondant aux propriétés susmentionnées. Le tambour cylindrique (30) est entraîné en rotation autour de son axe par un moteur d'entraînement (38) d'axe parallèle à l'axe du tambour, par une roue dentée (39) calée sur l'arbre (40) du moteur et par une chaîne (41) attaquant la denture (41a) réalisée à la périphérie du flasque (34) associé à la base du tambour. Les boulets (43) du broyeur disposés à l'intérieur du tambour (30), sont de forme sensiblement sphérique, de faible diamètre, de l'ordre de 5 à 10 mm, et sont réalisés en une matière de poids spécifique élevé et de haute résistance à l'usure par abrasion et frottement. Il s'agit, par exemple, de billes ou boulets en acier ou chrome en fonte, au nickel-chrome, en matière céramique ou en toute autre matière répondant aux conditions ci-dessus. Un conduit (42) d'amenée du combustible solide humide, fixe par rapport au tambour et coaxial à ce dernier, débouche à l'intérieur du tambour par une ouverture (44) réalisée dans la base (35) de ce dernier, l'alimentation en combustible se faisant au moyen d'un doseur (45), tel que vis sans fin, agencé dans le conduit d'amenée (42), l'évacuation du combustible pulvérisé se faisant au moyen d'un conduit (46) fixe par rapport au tambour (30) et coaxial à ce dernier, débouchant à l'intérieur du tambour (30) à travers une ouverture (47) et réalisée dans la base (35a) de celui-ci. L'ouverture (44) à travers laquelle le conduit d'amenée du combustible (42) débouche dans le tambour est telle qu'il subsiste, entre les bords de l'ouverture et la face externe du conduit, un espace (48) suffisant pour le passage d'un comburant primaire gazeux. Le combustible pulvérisé et le comburant primaire du tambour cylindrique (30) sont amenés à la chambre de combustion par un ventilateur (49) associé au conduit d'évacuation (46), ce ventilateur (49) permettant d'aspirer le comburant primaire gazeux à travers l'espace annulaire (48) prévu à l'entrée, et à travers l'espace annulaire (50), prévu à la sortie. Le broyeur à boulets pourrait également être alimenté en combustible solide à forte teneur en eau, par exemple 30 à 50 % du mélange, de manière à constituer une pâte fluide et pompable. Dans ce cas, la circulation du combustible pulvérisé du tambour (30) vers la chambre de combustion se ferait par une pompe associée au conduit d'évacuation (46). La phase continue eau remplacerait alors le comburant gazeux primaire dans l'opération de broyage.

Suivant l'invention, le moteur d'entraînement (38) et les roues dentées (39, 41) sont tels qu'ils permettent d'assurer au tambour (30) une vitesse supercritique, c'est-à-dire supérieure à la vitesse limite pour laquelle la force centrifuge exercée sur un corps broyant, tel que boulet ou bille, dans sa position la plus haute, est égale et opposée à la force de gravité, de telle sorte qu'au lieu de retomber, ce corps suive une trajectoire circulaire de centrifugation. Dans tous les broyeurs à boulets classiques équipés de revêtements intérieurs crénelés ou ondulés, le coefficient de friction entre le revêtement et la charge est égal à 1, et le broyage n'est possible qu'en vitesses subcritiques, où les billes retombent en cascade les unes sur les autres avec effets de choc. Au contraire, dans le broyeur à boulets de la présente invention, la surface intérieure du tambour cylindrique (30) est parfaitement lisse, le coefficient de friction entre le tambour et la charge étant nettement inférieur à 1, la charge étant elle-même modérée. Le broyage devient alors possible en vitesses supercritiques, ou les billes roulent intensément les unes sur les autres avec des effets d'attrition et de compression. Il en résulte un effet de broyage beaucoup plus intense et une production spécifique nettement plus élevée que dans les systèmes classiques.

Un autre avantage du broyeur à boulets de l'invention est de permettre la réalisation d'un broyeur représentant un rapport longueur-diamètre beaucoup plus élevé que les systèmes classiques, avec un grand rapport de réduction de dimension du grain moyen. Le broyeur à boulets de l'invention permet donc de réaliser un broyage fin ou ultra-fin en un seul passage, sans aucun tamis ni sélecteur extérieur ni recyclage de produit trop gros, et avec une consommation minimale d'énergie. Toutes autres conditions égales, des essais réalisés sur le broyeur à boulets de l'invention ont montré que la production de matière pulvérisée était donnée par la relation suivante:

$$P = K \times D^2 \times L \times N^{1,4}$$

avec

$P$ = production de charbon pulvérisé en kg/hre

K = constante, fonction des matières en présence

D = diamètre intérieur du tambour lisse en m

L = longueur intérieure du tambour lisse en m

N = vitesse de rotation du tambour lisse en tours/minute.

Ainsi qu'on l'a déjà précisé précédemment, l'équipement de chauffe de l'invention permet également d'épurer les produits de combustion ou buées rejetés à l'atmosphère. Cet objectif est atteint par la simple addition aux combustibles solides à l'entrée du broyeur ou aux produits de combustion de combustibles solides, liquides ou gazeux ou encore de buées à l'entrée du récupérateur de chaleur à condensation, de substances capables de fixer les matières nocives, telles que le soufre et les cendres volantes, par exemple des produits neutralisants, tels que le carbonate de calcium, le carbonate de potassium, le carbonate de sodium ou de la chaux vive. Plus de 90 % des sulfites et sulfates formés par la réation passeront ainsi en solution ou suspension dans l'eau condensée et seront évacués à l'égout.

## Revendications

1. Equipement de chauffe directe comprenant un brûleur, une chambre de combustion, un échangeur haute température et une source de combustible solide humide, ainsi qu'un broyeur pour broyer ce combustible en amont de la chambre de combustion et des moyens pour introduire directement dans cette dernière, sans réduire sa teneur en eau, le combustible broyé en présence d'un fluide comburant primaire, ce broyeur étant à percussion et comprenant, alignées suivant un axe vertical, une enceinte supérieure (1) munie d'un conduit d'alimentation (2) en combustible auquel est associé un doseur (3), et d'un conduit d'amenée (4) du comburant gazeux primaire, au moins une enceinte de broyage (5) pourvue d'une enveloppe (13), et une enceinte inférieure (14) pourvue d'un conduit (15) d'évacuation du combustible broyé et du comburant primaire vers la chambre de combustion, caractérisé en ce que le conduit d'amenée (4) du comburant gazeux primaire comprend un régulateur de débit (12) agencé pour que ce débit soit suffisant au maintien en suspension turbulente du combustible pulvérisé et insuffisant pour provoquer l'inflammation de ce dernier et en ce que l'enceinte de broyage comprend une trémie (6) en forme de tronc de cône dont l'axe est situé sur l'axe vertical susdit et dont la grande base (7) est raccordée à l'enceinte supérieure (1) précitée tandis que sa petite base (8) est située en regard d'un disque de broyage (9) calé sur l'arbre (10) d'un moteur (11) supporté dans l'enceinte de broyage (5), de manière à ce que lesdits moteur (11) et disque (9) soient coaxiaux à la trémie (6) et que le combustible broyé par le disque (9) soit projeté sur les parois internes de l'enveloppe (13) présentée par l'enceinte de broyage (5) et entourant la trémie (6), l'enceinte inférieure (14) étant raccordée sur l'enveloppe (13) de l'enceinte de broyage (5).

2. Equipement de chauffe directe suivant la revendication 1, caractérisé en ce que le moteur d'entraînement (11) du disque de broyage (9) est fixé dans un caisson (16) étanche, coaxial à la trémie (6), supporté à l'intérieur de l'enveloppe de broyage (13) par des bras (17) dont au moins un est creux pour permettre l'alimentation du moteur, une garniture d'étanchéité (18) étant prévue sur ce caisson (16) à l'endroit de passage de l'arbre (10) sur lequel est calé le disque de broyage (9).

3. Equipement de chauffe directe suivant l'une ou l'autre des revendications 1 et 2, caractérisé en ce que les parois internes de l'enveloppe susdite de broyage sont garnies d'un blindage (23) réalisé en un matériau présentant une haute résistance à l'usure.

4. Equipement de chauffe directe suivant l'une quelconque des revendications à 3, caractérisé en ce que le disque de broyage (9) comprend, sur sa face tournée vers la petite base (8) de la trémie (6), des broches (19) dont les axes sont parallèles à celui du disque.

5. Equipement de chauffe directe suivant la revendication 4, caractérisé en ce que les broches (19) sont régulièrement réparties sur le disque (9) suivant des rayons de ce dernier et à faibles distances les unes des autres.

6. Equipement de chauffe directe suivant la revendication 4, caractérisé en ce que le disque de broyage (9) susdit coopère avec un anneau (20) fixé à la périphérie de la petite base (8) de la trémie (6) coaxialement au disque de broyage, la face de cet anneau fixe (20) tournée vers le disque de broyage (9) étant garnie de broches (21) dont les axes sont parallèles aux broches (19) du disque de broyage (9), la distance séparant les faces tournées l'une vers l'autre du disque (9) et de l'anneau (20) étant supérieure à la longueur des broches les plus longues (19 ou 21) et inférieure à la somme de la longueur des broches (19) du disque et de la longueur des broches (21) de l'anneau, les broches (19, 21) du disque et de l'anneau étant régulièrement réparties suivant des cercles, dont les centres sont situés sur l'axe commun au disque (9) et à l'anneau (20), de manière à ce que les broches fixes (21) de l'anneau réparties sur un cercle soient toujours situées entre les broches mobiles (19) du disque de broyage réparties sur deux cercles.

7. Equipement de chauffe directe suivant l'une quelconque des revendications 4 à 6, caractérisé en ce que les broches (19, 21) susdites sont élastiques, renforcées, à ressort et de très grande dureté.

8. Equipement de chauffe directe suivant l'une quelconque des revendications 4 à 6, caractérisé en ce que les broches (19, 21) susdites sont immobilisées dans des trous (22) alésés, soit par des goupilles élastiques, soit par expansion ou encore par soudure.

9. Equipement de chauffe directe suivant la revendication 6, caractérisé en ce que le disque de broyage (9) à broches et l'anneau (20) à broches sont réalisés chacun en une seule pièce.

10. Equipement de chauffe directe comprenant un brûleur, une chambre de combustion, un échangeur haute température et une source de combustible solide humide, ainsi qu'un broyeur pour broyer ce combustible en amont de la chambre de combustion et des moyens pour introduire directement dans cette dernière, sans réduire sa teneur en eau, le combustible broyé en présence d'un fluide comburant primaire, caractérise en ce que le broyeur précité est constitué par un broyeur à boulets comprenant un tambour cylindrique (30) dont la longueur est supérieure au diamètre, un caisson (31) formant un berceau cylindrique (32) qui entoure la face latérale (33) du tambour sur une partie de son pourtour, des flasques circulaires (34, 34a) étant prévus sur chaque base (35, 35a) du tambour et leur rayon étant supérieur au rayon du berceau (32), les faces du caisson (31) en regard de la face latérale (33) du tambour (30) et en regard des flasques (34, 34a) étant perforées pour livrer passage à de l'air sous pression formant un coussin (37) pour, d'une part, supporter le tambour (30) et, d'autre part, maintenir ce dernier, grâce au coussin d'air entre le caisson (31) et les flasques (34, 34a), immobile suivant une direction parallèle à son axe, des moyens étant prévus pour mettre et maintenir ledit caisson (31) sous pression, des moyens d'entraînement agencés pour entraîner le tambour (30) en rotation autour de son axe, un conduit d'amenée (42) du combustible, fixe par rapport au tambour (30) et coaxial à ce dernier, débouchant à l'intérieur du tambour par une ouverture (44) réalisée dans une des bases (35) de ce dernier, un doseur (45) agencé dans ledit conduit d'amenée (42), un conduit d'évacuation (46) du combustible pulvérisé, fixe par rapport au tambour (30) et coaxial à ce dernier, débouchant à l'intérieur dudit tambour à travers une ouverture (47) réalisée dans l'autre base (35a) de celui-ci et des moyens pour faire circuler le combustible pulvérisé et le comburant primaire du tambour vers la chambre de combustion.

11. Equipement de chauffe directe suivant la revendication 10, caractérisé en ce qu'au moins l'ouverture (44) susdite à travers laquelle le conduit d'amenée (42) du combustible débouche dans le tambour (30) est telle qu'il subsiste, entre les bords de l'ouverture et la face externe du conduit, un espace (48) suffisant pour le passage d'un comburant primaire gazeux, les moyens précités pour faire circuler le combustible pulvérisé et le comburant primaire du tambour (30) vers la chambre de combustion étant constitués par un ventilateur (49) associé au conduit d'évacuation (46) susdit, ce ventilateur (49) étant tel qu'il puisse aspirer le comburant primaire gazeux à travers l'espace (48) précité subsistant autour du conduit d'amenée (42) du combustible.

12. Equipement de chauffe directe suivant la revendication 10, caractérisé en ce que les moyens précités pour faire circuler le combustible pulvérisé, dont la teneur en eau est de l'ordre de 30 à 50 % du tambour (30) vers la chambre de combustion, sont constitués par une pompe associée au conduit d'évacuation (46) susdit.

13. Equipement de chauffe directe suivant la revendication 12, caractérisé en ce que les moyens susdits, destinés à entraîner le tambour en rotation autour de son axe, sont constitués par un moteur d'entraînement (38) d'axe parallèle à l'axe du tambour, par une roue dentée (39) calée sur l'arbre (40) du moteur et par une chaîne (41) attaquant la denture (41a) réalisée à la périphérie d'un des flasques (34) associé à la base du tambour.

14. Equipement de chauffe directe suivant la revendication 13, caractérisé en ce que le moteur (38) et les roues dentées (39) sont tels qu'ils permettent d'assurer au tambour (30) une vitesse supercritique.

15. Equipement de chauffe directe suivant l'une quelconque des revendications 10 à 14, caractérisé en ce que les parois du tambour (30) sont réalisées en un matériau présentant un faible coefficient de friction à l'état sec et à l'état humide, ainsi qu'une grande résistance à l'usure par abrasion et frottement, les boulets (43) du broyeur étant de forme sensiblement sphérique, de faible diamètre, de l'ordre de 5 à 10 mm, et réalisés en une matière de poids spécifique élevé et de haute résistance à l'usure par abrasion et frottement.

**Patentansprüche**

1. Einrichtung zur unmittelbaren Beheizung, mit einem Brenner, einer Brennkammer, einem Hochtemperatur-Austauscher und einer Quelle für festen, feuchten Brennstoff sowie einer Zerkleinerungseinrichtung zum Zerkleinern des Brennstoffes vor der Brennkammer und einer Einrichtung, um den Brennstoff, der in Anwesenheit eines sauerstoffhaltigen Primärströmungsmittels zerkleinert wurde, unmittelbar in diese einzuleiten, ohne seinen Wassergehalt zu verringern, wobei die Zerkleinerungseinrichtung eine Schlag-Zerkleinerungseinrichtung ist und längs einer vertikalen Achse ausgerichtet eine obere Wand (1) aufweist, die mit einer Einspeiseleitung (2) für den Brennstoff versehen ist, der eine Dosierungseinrichtung (3) zugeordnet ist, und einer Zuführleitung (4) für sauerstoffhaltiges Primärgas, mindestens eine Zerkleinerungswand (5), die mit einer Umhüllung (13) versehen ist, und eine untere Wand (14), die mit einer Leitung (15) zur Entleerung des zerkleinerten Brennstoffs sowie des Primär-Sauerstoffträgers zur Brennkammer hin versehen ist, dadurch gekennzeichnet, daß die Zuführleitung (4) für das sauerstoffhaltige Primärgas einen Durchsatzregler (12) aufweist, der so ausgebildet ist, daß dieser Durchsatz zum Aufrechterhalten eines Fließbetts für den pulverisierten Brennstoff ausreicht, aber nicht ausreicht, um dessen Entflammen hervorzurufen, und daß die Zerkleinerungswand einen kegelstumpfförmigen Trichter (6) aufweist, dessen Achse auf deren vertikaler Achse liegt und dessen große Grundfläche (7) mit der obengenannten oberen Wand (1) verbunden ist, während seine untere Grundfläche (8) einer Zerkleinerungsscheibe (9) gegenüberliegend angeordnet ist, die auf der Welle (10) eines Motors (11) aufgekeilt ist, der in der Zerkleinerungswand (5) getragen ist, und zwar auf solche Weise, daß der Motor (11) und die Scheibe (9) koaxial zum Trichter (6) liegen und daß der durch die Scheibe (9) zerkleinerte Brennstoff auf die Innenwände der Umhüllung (13) geschleudert wird, die durch die Zerkleinerungswand (5) gebildet ist und den Trichter (6) umgibt, wobei die untere Wand (14) mit der Umhüllung (13) der Zerkleinerungswand (5) verbunden ist.

2. Einrichtung zum unmittelbaren Beheizen nach Anspruch 1, dadurch gekennzeichnet, daß der Antriebsmotor (11) für die Zerkleinerungsscheibe (9) in einem dichten Behälter (16) koaxial zum Trichter (6) befestigt ist, dar im Inneren der Zerkleinerungsumhüllung (13) durch Arme (17) getragen ist, von denen mindestens einer hohl ist, um die Versorgung des Motors zu ermöglichen, und daß eine Dichtungsarmatur (18) auf dem Behälter (16) an der Stelle der Durchdringung der Welle (10) vorgesehen ist, auf welche die Zerkleinerungsscheibe (9) aufgekeilt ist.

3. Einrichtung zur unmittelbaren Beheizung nach dem einen oder anderen der Ansprüche 1 und 2, dadurch gekennzeichnet, daß die Innenwände der obengenannten Zerkleinerungsumhüllung mit einer Auskleidung (23) versehen sind, die aus einem Material gebildet ist, das eine hohe Verschleißbeständigkeit aufweist.

4. Einrichtung zur unmittelbaren Beheizung nach irgendeinem der Ansprüche 1 bis 3, dadurch gekennzeichnet, daß die Zerkleinerungsscheibe (9) auf ihrer Fläche, die der kleinen Grundfläche (8) des Trichters (6) zugewandt ist, Dorne (19) aufweist, deren Achsen parallel zu jener der Scheibe sind.

5. Einrichtung zur unmittelbaren Beheizung nach Anspruch 4, dadurch gekennzeichnet, daß die Dorne (19) regelmäßig auf der Scheibe (9) gemäß deren Radien und mit geringen gegenseitigen Abständen verteilt sind.

6. Einrichtung zur unmittelbaren Beheizung nach Anspruch 4, dadurch gekennzeichnet, daß die obengenannte Zerkleinerungsscheibe (9) mit einem Ring (20) zusammenwirkt, der am Umfang der kleinen Grundfläche (8) dem Trichters (6) koaxial zur Zerkleinerungsscheibe befestigt ist, daß die Stirnfläche dieses festen Rings (20), die der Zerkleinerungsscheibe (9) zugewandt ist, mit Bornen (21) versehen ist, deren Achsen parallel sind zu den Dornen (19) der Zerkleinerungsscheibe (9), daß der Abstand, der die einander zugewandten Flächen der Scheibe (9) und des Rings (20) trennt, größer ist als die Länge der längsten Dorne (19 oder 21) und kleiner als die Summe der Länge der Dorne (19) der Scheibe und der Länge der Dorne (21) des Rings, und daß die Dorne (19, 21) der Scheibe und des Ringes regelmäßig über Kreise verteilt sind, deren Mitten auf der gemeinsamen Achse der Scheibe (9) und des Ringes (20) sitzen, und zwar so, daß die feststehenden Dorne (21) des Ringes, die auf einem Kreis verteilt sind, stets zwischen den beweglichen Dornen (19) der Zerkleinerungsscheibe sitzen, die auf zwei Kreise verteilt sind.

7. Einrichtung zur unmittelbaren Beheizung nach irgendeinem der Ansprüche 4 bis 6, dadurch gekennzeichnet, daß die obengenannten Dorne (19, 21) elastisch, verstärkt, federnd und von sehr großer Härte sind.

8. Einrichtung zur unmittelbaren Beheizung nach irgendeinem der Ansprüche 4 bis 6, dadurch gekennzeichnet, daß die obengenannten Dorne (19, 21) in gebohrte Löcher (22) unbeweglich eingesetzt sind, und zwar mittels elastischer Stifte, durch Aufweitung oder auch durch Schweißung.

9. Einrichtung zur unmittelbaren Beheizung nach Anspruch 6, dadurch gekennzeichnet, daß die Dornen-Zerkleinerungsscheibe (9) und der Dornen-Ring (20) jeweils einstückig ausgebildet sind.

10. Einrichtung zur unmittelbaren Beheizung, mit einem Brenner, einer Brennkammer, einem Hochtemperatur-Austauscher und einer Quelle für festen, feuchten Brennstoff sowie einer Zerkleinerungseinrichtung zum Zerkleinern des Brennstoffes vor der Brennkammer und einer Einrichtung, um den zerkleinerten Brennstoff ohne seinen Wassergehalt zu verringern unmittelbar in diese in Anwesenheit eines sauerstoffhaltigen Primärströmungsmittels einzuleiten, dadurch gekennzechnet, daß die obengenannte Zerkleinerungseinrichtung von einer Kugelmühle gebildet ist, die eine zylindrische Trommel (30) aufweist, deren Länge größer ist als der Durchmesser, ein Gehäuse (31), das eine zylindrische Wiege (32) bildet, die die Seitenfläche (33) der Trommel über einen Teil ihres Umfangs umgibt, kreisförmige Flansche (34, 34a), die auf jeder Grundfläche (35, 35a) der Trommel vorgesehen sind und deren Radius größer ist als der Radius der Wiege (32), wobei jene Flächen des Gehäuses (31), die der Seitenfläche (33) der Trommel (30) und den Flanschen (34, 34a) gegenüberliegen, perforiert sind, um Druckluft durchzulassen, die ein Polster (37) bildet, um einerseits die Trommel (30) zu tragen und andererseits diese dank des Luftpolsters zwischen dem Gehäuse (31) und den Flanschen (34, 34a) längs einer Richtung parallel zu ihrer Achse unbeweglich zu halten, wobei eine Einrichtung vorgesehen ist, um das Gehäuse (31) unter Druck zu Setzen und zu halten, eine Antriebseinrichtung, die zum Drehantrieb der Trommel (30) um ihre Achse ausgebildet ist, eine Zuführleitung (42) für den Brennstoff, die in Bezug auf die Trommel (30) festgelegt, zu dieser koaxial steht und in das Innere der Trommel über eine Öffnung (44) einmündet, die in einer der Grundflächen (35) dieser ausgebildet ist, eine Dosiereinrichtung (45), die in der genannten Zuführleitung (42) ausgebildet ist, eine Leitung (46) zum Entleeren des pulverisierten Brennstoffs, die in Bezug auf die Trommel (30) sowie koaxial zu dieser festgelegt ist und in das Innere der Trommel durch eine Öffnung (47) hindurch einmündet, die in deren anderer Grundfläche (35a) ausgebildet ist, und eine Einrichtung, um den pulverisierten Brennstoff und das sauerstoffhaltige Primärmittel der Trommel gegen die Brennkammer strömen zu lassen.

11. Einrichtung zur unmittelbaren Beheizung nach Anspruch 10, dadurch gekennzeichnet, daß mindestens die obengenannte Öffnung (44), über welche hinweg die Zuführleitung (42) für Brennstoff in die Trommel (30) einmündet, so ausgebildet ist, daß zwischen den Rändern der Öffnung und der Außenfläche der Leitung ein Raum (48) verbleibt, der für den Durchtritt eines sauerstoffhaltigen Primärgases ausreicht, wobei die oben erwähnte Einrichtung zum Veranlassen der Strömung des pulverisierten Brennstoffs und des sauerstoffhaltigen Primärmittels der Trommel (30) zur Brennkammer hin von einem Lüfter (49) gebildet ist, der der obengenannten Entnahmeleitung (46) zugeordnet ist, wobei der Lüfter (49) so ausgebildet ist, daß er das sauerstoffhaltige Primärgas durch den obengenannten Zwischenraum (48) hindurch ansaugen kann, der rund um die Zuführleitung (42) für den Brennstoff verbleibt.

12. Einrichtung zur unmittelbaren Beheizung nach Anspruch 10, dadurch gekennzeichnet, daß die obengenannte Einrichtung zum Veranlassen der Strömung des pulversierten Brennstoffs, dessen Wassergehalt in der Größenordnung von 30 bis 50 % beträgt, von der Trommel (30) zur Brennkammer hin von einer Pumpe gebildet ist, die der obengenannten Entnahmeleitung (46) zugeordnet ist.

13. Einrichtung zur unmittelbaren Beheizung nach Anspruch 12, dadurch gekennzeichnet, daß die obengenannte Einrichtung, die zum Drehantrieb der Trommel um ihre Achse bestimmt ist, von einem Antriebsmotor (38) mit einer zur Trommelachse parallelen Achse, einem auf der Motorwelle (40) aufgekeilten Zahnrad (39) und einer Kette (41) gebildet ist, die in eine Verzahnung (41a) eingreift, die am Umfang eines der Flansche (34) ausgebildet ist, der der Grundfläche der Trommel zugeordnet ist.

14. Einrichtung zur unmittelbaren Beheizung nach Anspruch 13, dadurch gekennzeichnet, daß der Motor (38) und die Zahnräder (39) so ausgebildet sind, daß sie für die Trommel (30) die Sicherstellung einer überkritischen Geschwindigkeit gestatten.

15. Einrichtung zur unmittelbaren Beheizung nach irgendeinem der Ansprüche 10 bis 14, dadurch gekennzeichnet, daß die Wände der Trommel (30) aus einem Material gebildet sind, das einen geringen Reibungsbeiwert im trockenen und im feuchten Zustand bietet, sowie eine große Beständigkeit gegenüber der Abnutzung durch Abrieb und Reibung, und daß die Kugeln (43) der Zerkleinerungseinrichtung eine im wesentlichen kugelige Form mit geringem Durchmesser in der Größenordnung von 5 bis 10 mm aufweisen und aus einem Material mit erhöhtem spezifischem Gewicht und hoher Abnutzungsbeständigkeit gegenüber Abrieb und Reibung gebildet sind.

## Claims

1. A direct heating installation, comprising a burner, a combustion chamber, high-temperature exchanger and a wet solid fuel source, and a pulveriser to pulverise said fuel upstream of the combustion chamber and means for directly introducing into the latter, without reducing its water content, the pulverised fuel in the presence of a primary combustion-supporting fluid, said pulveriser being of the percussion type and comprising, in alignment along a vertical axis, a top chamber (1) provided with a fuel feed conduit (2) with which a dispensing means (3) is associated, and a primary gaseous combustion-supporting agent sypply conduit (4), at least one pulverising chamber (5) provided with a casing (13), and a bottom chamber (14) provided with a conduit (15) for discharging the pulverised fuel and the primary combustion-supporting agent to the combustion chamber, characterised in that the primary gaseous combustion-supporting agent supply conduit (4) comprises a flow regulator (12) so arranged that said flow is sufficient to maintain the sprayed fuel in turbulent suspension and insufficient to cause ignition of the letter and in that the pulverising chamber comprises a frusto-conical hopper (6) whose axis is situated on the said vertical axis and whose major base (7) is connected to the said top chamber (1) while its minor base (8) is situated opposite a pulverising disc (9) keyed on the shaft (10) of a motor (11) supported in the pulverising chamber (5), in such manner that said motor (11) and disc (9) are coaxial with the hopper (6) and the fuel pulverised by the disc (9) is projected on to the inner walls of the casing (13) formed by the pulverising chamber (5) and surrounding the hopper (6), the bottom chamber (14) being connected to the casing (13) of the pulverising chamber (5).

2. A direct heating installation according to claim 1, characterised in that the drive motor (11) for the pulverising disc (9) is fixed in a sealed box (16) coaxial with the hopper (6) and supported inside the pulverising casing (13) by arms (17) at least one of which is hollow to allow the supply to the motor, a gasket (18) being provided on said box (16) at the place where the shaft (10) on which the pulverising disc (9) is keyed passes therethrough.

3. A direct heating installation according to claim 1 or 2, characterised in that the inner walls of the said pulverising casing are provided with shielding (23) made from a material having high resistance to wear.

4. A direct heating installation according to any one of claims 1 to 3, characterised in that the surface of the pulverising disc (9) facing the minor base (8) of the hopper (6) comprises pins (19) whose axes are parallel to the disc axis.

5. A direct heating installation according to claim 4, characterised in that the pins (18) are distributed uniformly over the disc (9) along the radii thereof and close to one another.

6. A direct heating installation according to claim 4, characterised in that the said pulverising disc (9) co-operates with a ring (20) fixed to the periphery of the minor base (8) of the hopper (6) coaxially with the pulverising disc, that surface of said fixed ring (20) which faces the pulverising disc (9) being provided with pins (21) whose axes are parallel to the pins (19) of the pulverising disc (9), the distance between the facing surfaces of the disc (9) and the ring (20) being greater then the length of the longest pins (19 or 21) and less than the sum of the length of the pins (19) of the disc and at the length of the pins (21) of the ring, the pins (19, 21) of the disc and of the ring being uniformly distributed over circles whose centres are situated on the common axis of the disc (9) and the ring (20), in such manner that the fixed pins (21) of the ring distributed over a circle are always situated between the movable pins (19) of the pulverising disc distributed over two circles.

7. A direct heating installation according to any one of claims 4 to 6, characterised in that the said pins (19, 21) are elastic, reinforced, sprung and of very great hardness.

8. A direct heating installation according to any one of claims 4 to 6, characterised in that the said pins (19, 21) are locked in bored holes (22) either by elastic pins or by expansion or alternatively by welding.

9. A direct heating installation according to claim 8, characterised in that the pulverising disc (9) with its pins and the ring (20) with its pins are each made in one piece.

10. A direct heating installation comprising a burner, a combustion chamber, a high-temperature exchanger and a wet solid fuel source, and a pulveriser to pulverise said fuel upstream of the combustion chamber and means for directly introducing into the latter, without reducing its water content, the pulverised fuel in the presence of a primary combustion-supporting fluid, characterised in that the pulveriser is a ball pulveriser comprising a cylindrical drum (30) whose length is larger than the diameter, a box (31) forming a cylindrical cradle (32) which surrounds the side surface (33) of the drum over part of its periphery, circular plates (34, 34a) being provided on each base (35, 35a) of the drum and their radius being greater than the radius of the cradle (32), the surfaces of the box (31) which face the side surface (33) of the drum (30) and which face the plates (34, 34a) being perforate to allow passage of air under pressure to form a cushion (37) in order, on the one hand, to support the drum (30) and, on the other hand, hold the latter, by means of the air cushion between the box (31) and the plates (34, 34a), motionless in a direction parallel to its axis, means being provided to pressurise and maintain said box under pressure, drive means adapted to drive the drum (30) in rotation about its axis, a fuel supply conduit (42) which is fixed with respect to the drum (30) and coaxial therewith, leading to the interior of the drum via an aperture (44) formed in one of the bases (35) thereof, a dispensing means arranged in said supply conduit (42), a sprayed fuel discharge conduit (46), which is fixed with respect to the drum (30) and coaxial therewith, leading to the interior of said drum through an aperture (47) formed in the other base (35) thereof and means to cause the sprayed fuel and the primary combustion-supporting agent to flow from the drum to the combustion chamber.

11. A direct heating installation according to claim 10, characterised in that at least the said aperture (44) through which the fuel supply conduit (42) leads into the drum (30) is such that there is left between the edges of the aperture and the outer surface of the conduit a space (48) sufficient for the passage of a primary gaseous combustion-supporting agent, the said means for causing the sprayed fuel and the primary combustion-supporting agent to flow from the drum (30) to the combustion chamber being formed by a fan (49) associated with the said discharge conduit (45), said fan (49) being such that it can draw in the gaseous primary combustion-supporting agent through the said spice left around the fuel supply conduit (42).

12. A direct heating installation according to claim 10, characterised in that the said means for causing the flow of sprayed fuel, whose water content is of the order of 35 to 50 %, from the drum (30) to the combustion chamber are formed by a pump associated with the said discharge conduit (45).

13. A direct heating installation according to claim 12, characterised in that the said means adapted to drive the drum in rotation about its axis are formed by a drive motor (38) whose axis is parallel to the drum axis, by a gearwheel (39) keyed on the motor shaft (40), and by a chain (41) engaging the teeth (41a) formed at the periphery of one of the plates (34) associated with the base of the drum.

14. A direct heating installation according to claim 13, characterised in that the motor (38) and the gearwheels (39) are such as to ensure a supercritical speed for the drum (30).

15. A direct heating installation according to any one of claims 10 to 14, characterised in that the walls of the drum (30) are made from a material having a low coefficient of friction in the dry state and in the wet state and high resistance to wear due to abrasion and friction, the pulveriser balls (43) being of substantially spherical shape, small diameter, of the order of 5 to 10 mm, and made from a material of high specific gravity and high resistance to wear from abrasion and friction.

FIG.1

FIG.2

FIG.3